# FASCICULE DE BREVET EUROPEEN

(11) **EP 1 093 421 B1**
(45) Date de publication et mention de la délivrance du brevet: **31.03.2010**
(21) Numéro de dépôt: 00922755.4
(22) Date de dépôt: 26.04.2000
(51) Int. Cl.: B60J 10/08, B60J 10/00

(54) **JOINT D'ETANCHEITE A EFFET INSONORISANT POUR OUVRANT DE VEHICULE AUTOMOBILE**
SCHALLDÄMMENDE DICHTUNG FÜR EINE KRAFTFAHRZEUGÖFFNUNG
SOUNDPROOFING SEALING JOINT FOR AN OPENING PANEL IN A MOTOR VEHICLE

(30) Priorité: 04.05.1999 FR 9905645
(43) Date de publication de la demande: 25.04.2001
(73) Titulaire: Sealynx Automotive Transieres, 92000 Nanterre (FR)
(72) Inventeur: MARTIN, Ange, F-95130 Franconville (FR)
(74) Mandataire: Roger, Walter
(86) Numéro de dépôt international: PCT/FR2000/001106
(87) Numéro de publication internationale: WO 2000/066383

(56) Documents cités:
- EP-A- 0 873 897
- DE-C- 19 720 713
- PATENT ABSTRACTS OF JAPAN vol. 11, no. 86 (M-572), 17 mars 1987 (1987-03-17) & JP 61 241228 A (TOYODA GOSEI CO LTD), 27 octobre 1986 (1986-10-27) cité dans la demande

## Description

La présente invention concerne un joint d'étanchéité à effet insonorisant pour ouvrant de véhicule automobile, tel que coffre, hayon, custode, porte ou autre.

De tels joints comprennent, par exemple, un profilé formant pince à section en U, en élastomère ou en plastomère, comportant généralement une armature rigide, qui est destiné à coiffer et pincer une partie saillante de l'encadrement de l'ouverture associée à cet ouvrant dans la carrosserie de l'automobile, ou des moyens similaires de fixation sur cet encadrement, et au moins un profilé tubulaire en un matériau déformable élastiquement, généralement un matériau cellulaire, faisant saillie vers l'extérieur à partir de l'encadrement et, notamment, à partir d'une branche latérale ou de la base du profilé à section en U coiffant un bord saillant de cet encadrement, auquel il est attenant, en vue d'être comprimé entre l'ouvrant et l'encadrement de l'ouverture associée, en position de fermeture de cet ouvrant, pour assurer l'étanchéité du véhicule.

Le profilé à section en U et le profilé tubulaire sont habituellement en des matériaux thermoplastiques ou élastomériques et sont réalisés par coextrusion.

Outre son rôle d'organe d'étanchéité, lorsqu'il est comprimé par l'ouvrant, en position de fermeture de celui-ci, le profilé tubulaire a aussi une fonction d'insonorisation de l'habitacle du véhicule et il a donc été proposé dans le passé d'apporter divers perfectionnements à ce profilé circulaire, en vue d'améliorer ses propriétés insonorisantes.

Pour plus de clarté, diverses réalisations de la technique antérieure vont être décrites brièvement ci-après, en référence aux figures suivantes des dessins annexés, qui représentent :
Figure 1: une coupe transversale d'un joint usuel de la technique antérieure, dans lequel le profilé tubulaire unique ne comporte aucune disposition particulière ;
Figure 2: une coupe transversale d'un autre joint de la technique antérieure, comprenant deux profilés tubulaires attenants l'un à l'autre et destinés à être comprimés par le même ouvrant ;
Figure 3 : une coupe transversale d'un troisième joint d'un type connu, comprenant un unique profilé tubulaire, qui présente une cloison transversale interne.

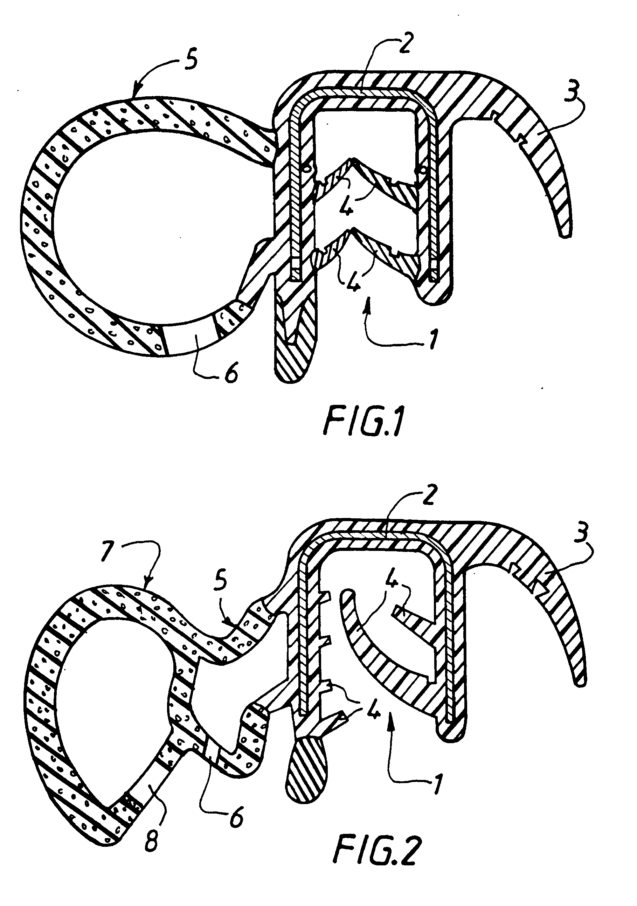

Le joint représenté sur la figure 1 comprend un profilé à section en U, 1, par exemple en élastomère, équipé d'une armature métallique 2 également à section en U et destiné à coiffer un bord saillant d'un encadrement de porte d'automobile. Une lèvre acoustique 3 fait saillie latéralement à partir de la base du U, tandis que des lèvres 4 en un matériau souple tel qu'un élastomère font saillie à l'intérieur du U à partir des branches de celui-ci, en vue d'enserrer fermement le bord saillant de l'encadrement.

Un profilé tubulaire 5, par exemple en caoutchouc cellulaire, est attenant à une des branches du profilé 1 et fait saillie latéralement vers l'extérieur du véhicule, du côté opposé à la lèvre 3. Ce profilé 5 est destiné à être comprimé entre l'encadrement de porte et cette porte, en position de fermeture de celle-ci, en vue d'assurer l'étanchéité de l'habitacle et de l'insonoriser, et il est percé d'orifices 6, disposés à intervalles réguliers ou non le long du profilé, pour permettre le passage de l'air vers l'extérieur du profilé ou vers l'intérieur de celui-ci.

Ce joint peut être réalisé par une unique opération de coextrusion.

Pour améliorer les qualités d'un tel joint, on a proposé d'utiliser deux profilés tubulaires attenants l'un à l'autre, comme représenté sur la figure 2. Sur cette figure, les organes déjà décrits en référence à la figure 1 sont désignés par les mêmes chiffres de référence et le second profilé tubulaire est désigné par la référence 7.

L'intérieur du profilé 7 communique avec l'extérieur par au moins un orifice 8, percé dans sa paroi latérale, et il est donc nécessaire de pratiquer deux perçages ou deux séries de perçage dans les profilés 5 et 7, ce qui complique les opérations de fabrication.

Un tel joint présente en outre une résistance accrue à la fermeture de l'ouvrant et il n'améliore pas de façon appréciable l'insonorisation du véhicule, car, comme dans le joint de la figure 1, les ondes sonores traversent seulement deux fois les parois du profilé 5 ou du profilé 7 avant de pénétrer dans l'habitacle.

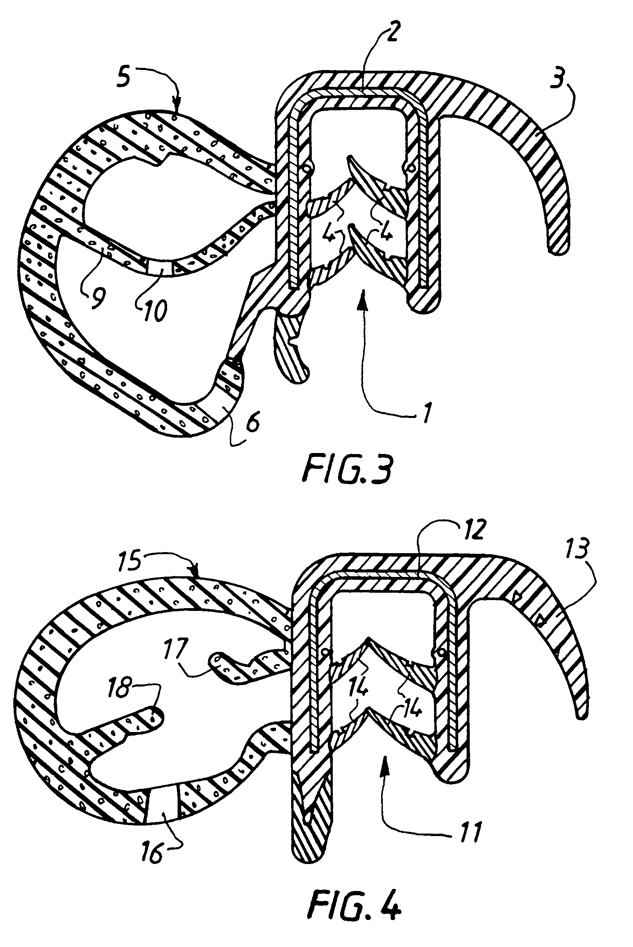

Pour remédier à ce dernier inconvénient, il a donc été proposé de prévoir une cloison transversale 9 dans le profilé tubulaire 5, comme représenté sur la figure 3, où les organes déjà décrits en référence à la figure 1 sont désignés par les mêmes chiffres de référence.

Un tel joint présente de meilleures qualités d'insonorisation, car les ondes sonores doivent traverser trois parois (deux fois celle du profilé 5 et la cloison 9) avant de pénétrer dans l'habitacle. En revanche, la cloison 9 rigidifie le profilé 5 et, outre le ou les orifices 6 percés dans la paroi de ce profilé, il est nécessaire de pratiquer également un ou des perçages 10 dans la cloison 9, pour faire communiquer entre eux les deux compartiments que sépare cette cloison, ce qui complique sensiblement les opérations de fabrication du joint. Enfin, la présence de la cloison 9 complique la déformation du profilé tubulaire dans les angles de l'encadrement de porte ou dans les zones proches des charnières de porte.

On connaît, par JP 61 241 228 A (Patent abstracts of Japan, vol 11, n° 86 (M-572) du 17 Mars 1987), un joint tubulaire destiné à être monté sur le pied-milieu de la carrosserie d'un véhicule automobile, c'est-à-dire sur le montant qui sépare une porte avant d'une porte arrière du véhicule. Selon ce document japonais, deux panneaux vitrés de porte sans cadre viennent comprimer ce joint en position de fermeture, de façon telle qu'une partie décorative du joint s'interpose entre les deux panneaux, de manière à être visible de l'extérieur. Dans cette position, une portion de cette partie décorative faisant saillie vers l'intérieur du joint vient prendre appui contre un pilier qui fait saillie en regard dans sa direction, de manière, est-il indiqué, à limiter le déplacement de la partie décorative, qui est ainsi centrée entre les deux panneaux.

Ce joint n'est cependant pas destiné à être comprimé entre un ouvrant d'un véhicule automobile et un encadrement de l'ouverture associée à cet ouvrant, puisqu'il ne s'étend que suivant la hauteur du pied-milieu de la carrosserie et, à supposer qu'il ait un effet insonorisant, ce qui n'est ni indiqué, ni évoqué, cet effet ne peut donc être que très insuffisant. L'effet technique recherché est d'ailleurs complètement différent, dans la mesure où l'on cherche simplement à maintenir une partie décorative du joint dans une postion adéquate entre les panneaux de porte.

La présente invention vise à remédier à ces inconvénients de la technique antérieure, en proposant un joint du même type général, comprenant un unique profilé tubulaire, dont la paroi latérale comporte toutefois un ou des perçages mettant en communication l'intérieur et l'extérieur du profilé, celui-ci étant ainsi apte à se déformer facilement sous la sollicitation d'un ouvrant, mais comportant des moyens tels qu'en position comprimée, il oppose néanmoins aux ondes sonores plus de deux barrières à traverser, avant de pénétrer dans l'habitacle du véhicule, dont l'insonorisation est ainsi sensiblement améliorée.

A cet effet, l'invention a pour objet un joint d'étanchéité à effet insonorisant pour ouvrant de véhicule automobile, selon la revendication 1. Conformément à l'invention, le profilé tubulaire est équipé de deux premières lèvres et d'une seule seconde lèvre, ou inversement, afin de faciliter l'entrée en contact de ces lèvres ou leur mise en contact avec la paroi opposée, lors de la compression du profilé tubulaire par l'ouvrant et de la déformation qui en résulte, en particulier dans les portions d'angle de l'encadrement de l'ouverture associée, ou dans les zones des charnières.

Le profilé tubulaire, qui ne comporte pas de cloison interne continue, présente une grande souplesse et peut donc être déformé facilement par l'ouvrant. En outre, seule la paroi latérale de ce profilé tubulaire comporte des orifices pour le passage de l'air et les opérations de perçage de cette paroi sont donc aussi aisées qu'avec le joint de la figure 1.

Les moyens de fixation du joint sur l'ouvrant ou sur l'encadrement de l'ouverture prévue dans la carrosserie pour cet ouvrant peuvent être de tout type connu dans la technique.

En particulier, le joint peut comprendre un profilé à section en U formant pince, en élastomère ou plastomère, apte à coiffer en la pinçant une partie saillante de l'encadrement de l'ouverture du véhicule associée à l'ouvrant, le profilé tubulaire étant attenant à une branche ou à la base du profilé à section en U de manière à faire saillie vers l'extérieur de l'encadrement.

Le profilé tubulaire peut aussi être attenant à une embase apte à être collée ou fixée, par exemple par clipsage, sur l'ouvrant ou sur l'encadrement de l'ouverture associée de la carrosserie.

D'autres caractéristiques et avantages de ce joint apparaîtront dans la description détaillée qui va suivre de diverses formes de réalisation du joint conforme à l'invention. Dans cette description, on se référera aux figures 4 à 8 des dessins annexés, sur lesquelles :
La figure 4 est une vue en coupe transversale d'une première forme de réalisation du joint n'étant pas conforme à l'invention ;

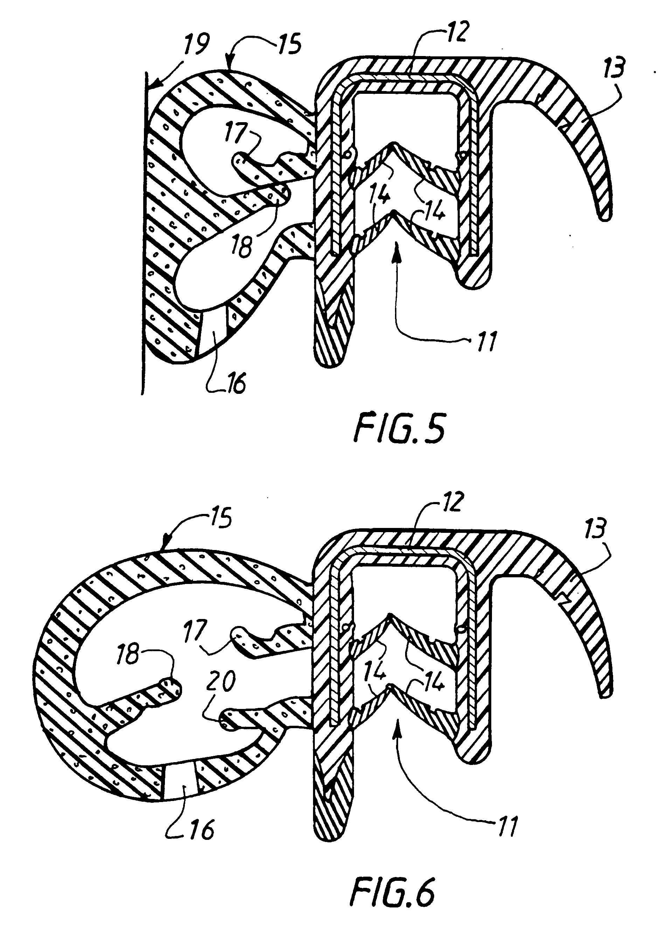

La figure 5 représente le joint de la figure 4 comprimé par un ouvrant;
La figure 6 est une coupe transversale d'une autre forme de réalisation du joint conforme à l'invention ;

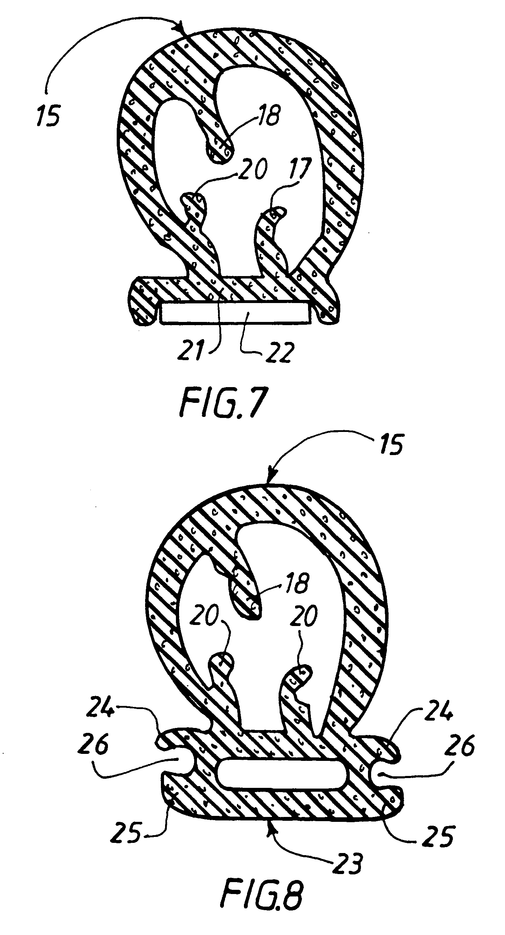

Les figures 7 et 8 sont des coupes transversales de deux autres joints conformes à l'invention, analogues à celui de la figure 6, mais comportant des moyens différents de fixation sur l'ouvrant ou sur l'encadrement de l'ouverture associée de la carrosserie.

Dans le joint de la figure 4, on retrouve un profilé formant pince 11, à section en U, en élastomère ou plastomère et à armature métallique 12, à partir de la base duquel fait saillie latéralement vers l'extérieur une lèvre 13, tandis que des lèvres 14 en un matériau déformable élastiquement font saillie vers l'intérieur du profilé, à partir de chaque branche du U, en direction de la branche opposée.

Comme dans la technique antérieure, un joint tubulaire 15, en un matériau déformable élastiquement, fait saillie latéralement vers l'extérieur, ici à partir d'une branche du profilé 11, du côté opposé à la lèvre 13, en vue d'être comprimé entre un bord saillant d'un encadrement de porte, que coiffe et pince le profilé 11, et cette porte, en position de fermeture de cette dernière. Le profilé 15 pourrait naturellement être attenant à la base du U du profilé 11 formant pince. La paroi latérale de ce profilé 15 est percée d'au moins un orifice 16 pour le passage de l'air vers l'intérieur ou l'extérieur du profilé.

Une première lèvre souple 17 fait saillie vers l'intérieur du profilé tubulaire 15, à partir de la branche du profilé 11 à laquelle ce profilé tubulaire est attenants, tandis qu'une seconde lèvre souple 18 fait également saillie vers l'intérieur du profilé 15, en direction de la lèvre 17, à partir de la portion de la paroi de ce profilé opposée à cette lèvre 17.

Ces deux lèvres ont des dimensions telles que, comme on le voit sur la figure 5, lorsque le profilé tubulaire 15 est comprimé et déformé par une porte 19 (ou un autre ouvrant), en position de fermeture de celle-ci, ces lèvres 17, 18, viennent en position contiguë, en contact mutuel, avec recouvrement partiel, de manière à former une barrière d'épaisseur partiellement double sur le trajet des ondes sonores, ou en contact avec la paroi opposée, en formant des cloisons multiples, en améliorant ainsi de façon considérable l'insonorisation de l'habitacle du véhicule.

Les lèvres souples 17 et 18 sont beaucoup plus faciles à réaliser qu'une cloison interne continue du profilé tubulaire 15 et n'opposent aucune résistance à la compression de ce profilé en début de fermeture. En outre, seule la paroi du profilé nécessite un perçage et le joint conforme à l'invention est donc d'un coût réduit par rapport à ceux de la technique antérieure, tout en ayant des performances insonorisantes et de déformation dans tous les angles beaucoup plus satisfaisantes.

Le joint de la figure 6 est en tout point identique à celui de la figure 4 et les organes similaires sont désignés par les mêmes chiffres de référence, mais il comporte une troisième lèvre 20 faisant saillie vers l'intérieur du profilé tubulaire 15, en direction de la lèvre 18, à partir de la branche du profilé 11 à laquelle est attenant le profilé tubulaire 15. Cette troisième lèvre 20 est destinée à faciliter la réalisation d'une barrière transversale supplémentaire sur le trajet des ondes sonores, à l'intérieur du profilé 15, lorsque celui-ci est comprimé par la porte, par le positionnement en contact mutuel avec recouvrement partiel de la lèvre 18 et de la lèvre 17 et/ou de la lèvre 20. Ceci est particulièrement avantageux lorsque l'encadrement de porte présente des portions à angles très accusés, dans lesquelles le profilé 15 est appelé à se déformer d'une manière différente dans ces angles que dans les autres emplacements de l'encadrement.

Naturellement, au lieu de faire saillie vers l'intérieur du profilé 15 à partir de la branche du profilé 11 à laquelle ce profilé 15 est attenant, la troisième lèvre pourrait faire saillie vers l'intérieur du profilé 15 à partir de la portion de la paroi de ce profilé opposée au profilé 11, en direction de ce dernier. On pourrait également prévoir deux lèvres faisant saillie vers l'intérieur du profilé 15 à partir de la branche du profilé 11 à laquelle il est attenant et deux autres lèvres faisant saillie vers l'intérieur de ce profilé 15 à partir de la portion de paroi de celui-ci opposée au profilé 11, en direction de ce dernier.

Les figures 7 et 8, sur lesquelles les organes déjà décrits en relation avec la figure 6 sont désignés par les mêmes chiffres de référence, illustrent des réalisations du joint conforme à l'invention dans lesquelles le profilé tubulaire est équipé de moyens de fixation différents de ceux de la figure 6 sur l'ouvrant ou sur l'encadrement de l'ouverture de la carrosserie qu'il équipe.

Dans la réalisation de la figure 7, le profilé tubulaire 15 comporte une embase 21, faisant corps avec le profilé et à partir de laquelle les lèvres 17 et 20 font saillie vers l'intérieur du profilé en direction de la lèvre 18 attenante à la paroi opposée. Cette embase 21 peut être simplement collée sur une partie 22 de l'ouvrant ou de la carrosserie du véhicule.

Dans la variante de la figure 8, le profilé tubulaire 15 comporte à nouveau une embase 23, mais de profil tubulaire, à partir de laquelle font saillie latéralement des lèvres 24 et 25, définissant des parties évidées 26 formant glissières, dans lesquelles peuvent être engagées par clipsage des parties en saillie de l'ouvrant ou de la carrosserie du véhicule.

Dans toutes ces variantes, le joint conforme à l'invention peut naturellement être réalisé de façon simple, comme les joints de la technique antérieure, par extrusion ou coextrusion de matières thermoplastiques ou élastiques.

## Revendications

1. Joint d'étanchéité pour ouvrant (19) de véhicule automobile, destiné à équiper cet ouvrant ou un encadrement d'une ouverture de la carrosserie du véhicule associée à cet ouvrant, ce joint comprenant un profilé tubulaire (15) en un matériau déformable élastiquement, apte à être rendu solidaire de l'ouvrant ou de l'encadrement en faisant saillie vers l'extérieur de celui-ci, de manière à pouvoir être comprimé et déformé entre l'encadrement et l'ouvrant (19) en position de fermeture de ce dernier, au moins un orifice (16) étant percé dans la paroi latérale du profilé tubulaire (15), de manière à mettre en communication l'intérieur et l'extérieur de ce profilé, ce joint étant **caractérisé en ce qu'**il comporte au moins deux premières lèvres souples (17, 20) faisant saillie vers l'intérieur du profilé tubulaire à partir de la partie contiguë à l'ouvrant ou à l'encadrement qu'il équipe, tandis qu'au moins une seconde lèvre souple (18) fait saillie vers l'intérieur du profilé tubulaire en direction de la première lèvre (17) à partir de la portion opposée de la paroi de celui-ci, les dimensions des première et seconde lèvres (17, 20, 18) étant telles qu'en position comprimée du profilé tubulaire (15), ces lèvres puissent venir sensiblement en contact mutuel, de préférence avec recouvrement, ou en contact avec la paroi opposée du profilé, ou inversement, il comporte deux seconds lèvres et au moins une première lèvre, formant des barrières transversales sur le trajet des ondes sonores, à l'intérieur du profilé (15) lorsque celui-ci est comprimé par le positionnement en contact mutuel avec recouvrement partiel de la lèvre (18) et de la lèvre (17) et/ou de lèvre 20.

2. Joint selon la revendication 1, **caractérisé en ce que** le profilé tubulaire (15) comprend deux premières lèvres et deux secondes lèvres.

3. Joint selon l'une des revendications 1 à 2, **caractérisé en ce que**, de façon connue en soi, il comprend un profilé (11) à section en U formant pince, en élastomère ou plastomère, apte à coiffer en la pinçant une partie saillante de l'encadrement de l'ouverture du véhicule associée à l'ouvrant (19), le profilé tubulaire (15) étant attenant à une branche ou à la base de ce profilé (11) à section en U de manière à faire saillie vers l'extérieur de l'encadrement.

4. Joint selon l'une des revendications 1 à 2, **caractérisé en ce que**, de façon connue en soi, le profilé tubulaire (15) est attenant à une embase (21) apte être collée sur une partie (22) de l'ouvrant ou de l'encadrement qu'équipe le joint.

5. Joint selon l'une des revendications 1 à 2, **caractérisé en ce que**, de façon connue en soi, le profilé tubulaire (15) est attenant à une embase (23), apte à être fixée, notamment par clipsage, sur l'ouvrant ou l'encadrement qu'équipe le joint.

## Claims

1. Seal for a motor vehicle opening leaf (19), intended to be fitted to this opening leaf or a surround of an opening of the vehicle bodywork associated with this opening leaf, this seal comprising a tubular section piece (15) made of an elastically deformable material able to be secured to the opening leaf or to the surround while projecting outward therefrom, so as to be able to be compressed and deformed between the surround and the opening leaf (19) when the latter is in the closed position, at least one orifice (16) being pierced in the side wall of the tubular section piece (15) so as place the inside and the outside of this section piece in communication, this seal being **characterized in that** it comprises at least two first flexible lips (17, 20) projecting toward the inside of the tubular section piece from the part contiguous with the opening leaf or the surround to which it is fitted, while at least a second flexible lip (18) projects toward the inside of the tubular section piece in the direction of the first lip (17) from the opposite portion of the wall of the section piece, the dimensions of the first and second lips (17, 20, 18) being such that, when the tubular section piece (15) is in the compressed position, these lips can substantially come into mutual contact, preferably with overlap, or into contact with the opposite wall of the section piece, or, conversely, it comprises two second lips and at least one first lip, forming transverse barriers in the path of the sound waves, on the inside of the section piece (15) when the latter is compressed by the lip (18) and the lip (17) and/or the lip (20) being positioned in mutual contact with partial overlap.

2. Seal according to Claim 1, **characterized in that** the tubular section piece (15) comprises two first lips and two second lips.

3. Seal according to either of Claims 1 and 2, **characterized in that**, in a manner known per se, it comprises a section piece (11) os U-shaped cross section forming a clip, made of elastomer or plastomer, capable of fitting onto and gripping a projecting part of the surround of the vehicle opening associated with the opening leaf (19), the tubular section piece (15) being attached to a branch or to the base of this U-section section piece (11) so as to project toward the outside of the surround.

4. Seal according to either of Claims 1 and 2, **characterized in that**, in a manner known per se, the tubular section piece (15) is attached to a foot (21) able to be bonded onto a part (22) of the opening leaf or of the surround to which the seal is fitted.

5. Seal according to either of Claims 1 and 2, **characterized in that**, in a manner known per se, the tubular section piece (15) is attached to a foot (23) able to be fixed, for example by clipping, onto the opening leaf or the surround to which the seal is fitted.

## Patentansprüche

1. Dichtung für einen Flügel (19) eines Automobils, dazu bestimmt, diesen Flügel oder einen Rahmen einer diesem Flügel zugeordneten Öffnung der Karosserie zu bestücken,
wobei die Dichtung ein schlauchförmiges Profil (15) aus einem elastisch verformbaren Material enthält, der dazu gesignet ist, mit dem Flügel oder dem Rahmen verbunden zu werden, indem es von diesem nach außen vorspringt, so dass es zwischen dem Rahmen und dem Flügel (19) in der geschlossenen Stellung des letzteren zusammengedrückt und verformt sein
wobei zumindest eine Öffnung (16) in der Seitenwand des schlauchförmigen Profils (15) gebildet ist, so dass das Innere und das Äußere dieses Profils miteinander in Verbindung stehen,
wobei diese Dichtung **dadurch gekennzeichnet ist, dass** sie zumindest zwei erste nachgiebige Lippen (17, 20) enthält, die von dem Abschnitt aus, der an den Flügel oder den Rahmen, den er bestückt, angrenzt, zum Inneren des schlauchförmigen Profils hin vorspringen,
während zumindest eine zweite nachgiebige Lippe (18) zum Inneren des schlauchförmigen Profils hin in Richtung auf die erste Lippe (17) von dem Abschnitt aus vorspringt, der der Wand dieser gegenüberliegt,
wobei die Abmessungen der rsten und zweiten Lippen (17, 20, 18) so sind, dass diese Lippen in einer zusammengedrückten Stellung des schlauchförmigen Profils (15) im Wesentlichen in gegenseitigen Kontakt kommen können, vorzugsweise mit Überdeckung, oder in kontakt mit der gegenüberliegenden Wand des Profils, oder dass sie umgekehrt zwei zweite Lippen und zumindest eine Lippe enthält, die im Inneren des Profils (15), wenn dieses zusammengedrückt ist, durch die Positionierung der Lippe (18) und der Lippe (17) und/oder der Lippe (20) in gegenseitigem Kontakt mit teilweiser Überdeckung Querbarrieren auf dem Weg von Schallwellen bilden.

2. Dichtung gemäß Anspruch 1, **dadurch gekennzeichnet, dass** das schlauchförmige Profil (15) zwei erste Lippen und zwei zweite Lippen enthält.

3. Dichtung gemäß einem der Ansprüche 1 bis 2, **dadurch gekennzeichnet, dass**
sie auf an sich bekannte Weise ein Profil (11) aus Elastomer oder Plastomer mit U-Querschnitt enthält das eine Klammer bildet und dazu geeignet ist, einen vorspringenden Abschnitte das Rahmens der dem Flügel (19) zugeordneten Öffnung des Fahrzeugs zu bedecken, indem es ihn einklemmt,
wobei dass schlauchförmige Profil (15) an einen Arm oder die Basis dieses Profils (11) mit U-Querschnitt so angrenzt, dass es von dem Rahmen aus nach außen vorspringt.

4. Dichtung gemäß einem der Ansprüche 1 bis 2, **dadurch gekennzeichnet, dass** das schlauchförmige Profil (15) auf an sich bekannte Weise an eine Basis (21) angrenzt, die dazu geeignet ist, auf einen Abschnitt (22) des Flügels oder des Rahmens geklebt, zu werden, den die Dichtung bestückt.

5. Dichtung gemäß einem der Ansprüche 1 bis 2, **dadurch gekennzeichnet, dass** das schlauchförmige Profil (15) auf an sich bekannte Weise an eine Basis (23) angrenzt, die dazu geeignet ist, insbesondere durch Klipsen an dem Flügel oder dem rahmen befestigt zu werden, den die Dichtung bestückt.
